# EUROPÄISCHE PATENTSCHRIFT

(11) **EP 1 884 410 B1**
(45) Veröffentlichungstag und Bekanntmachung des Hinweises auf die Patenterteilung: **27.04.2011**
(21) Anmeldenummer: 07010130.8
(22) Anmeldetag: 22.05.2007
(51) Int. Cl.: B60R 9/06

(54) **Hecklastenträger**
Rear load carrier
Porte-charge

(30) Priorität: 04.08.2006 DE 202006012073 U
(43) Veröffentlichungstag der Anmeldung: 06.02.2008
(73) Patentinhaber: EUFAB GmbH, 42781 Haan (DE)
(72) Erfinder: Becker, Alexander, 42329 Wuppertal (DE)
(74) Vertreter: Paul, Dieter-Alfred

(56) Entgegenhaltungen:
- EP-A- 1 095 820
- EP-A- 1 293 386
- WO-A-2006/004520
- WO-A-2006/033573
- DE-A1- 10 118 418
- DE-A1- 10 155 232
- DE-A1-102004 030 082

## Beschreibung

Die Erfindung betrifft einen Hecklastenträger zur Montage an einem Kraftfahrzeug mit einem Tragrahmen, der eine Anschlusseinrichtung zur Befestigung an einer fahrzeugseitigen Anhängerkupplung aufweist, wobei die Anschlusseinrichtung einen Anschlusskörper sowie ein erstes und ein zweites Halteelement, die zwischen sich eine nach unten hin offene Aufnahme für einen Anschlußkopf der Anhängerkupplung bilden, aufweist, wobei das erste Halteelement an seinem der offenen Unterseiten der Aufnahme gegenüber liegenden Endbereich an dem Anschlußkörper um eine horizontale Schwenkachse verschwenkbar gehalten ist mittels einer Betätigungseinrichtung zwischen einer Haltestellung, in der die Halteelemente den in der Aufnahme befindlichen Anschlusskopf der Anhängerkupplung fixierend umfassen, und einer Einschubstellung, in der die Halteelemente einen derartigen Abstand zueinander haben, dass die Anschlusseinrichtung leicht auf den Anschlusskopf der Anhängerkupplung aufgesetzt und davon herunter genommen werden kann, hin und her bewegbar ist.

Im Stand der Technik sind verschiedene Formen von Hecklastenträgern für die Befestigung am Fahrzeugheck eines Kraftfahrzeuges bekannt. Sie weisen in der Regel einen Tragrahmen auf, der Halteelemente für die Halterung von beispielsweise Fahrrädern besitzt. Der Tragrahmen hat Abstützrahmenteile, über die er sich an verschiedenen Punkten des Fahrzeughecks abstützen kann.

Die Befestigung des Hecklastenträgers am Fahrzeugheck geschieht auf unterschiedliche Weise. So ist bekannt (vgl. US-PS 4,513,897, US-PS 4,394,948, US-PS 3,841,440, US-PS 3,927,810), hierfür ein Spannriemensystem vorzusehen. Dieses Spannriemensystem besteht aus einer Mehrzahl von Spannriemen, die an ihrem freien Ende Spannhaken aufweisen, welche dazu bestimmt sind, Fahrzeugkanten, beispielsweise Kanten von Kofferraumklappen oder Stoßfängern, zu hinterfassen. Das Spannriemensystem verspannt den Hecklastenträger so, dass er unter Vorspannung mit Hilfe der Abstützrahmenteile auf der Heckklappe und teilweise auch auf den Heckstoßfängern des Kraftfahrzeuges aufliegt und so fixiert ist.

Aus der DE-U-93 03 486.5 ist ein weiterer Hecklastenträger bekannt, der zur Befestigung an einer Heckklappe zwei Haltestreben aufweist, die im oberen Bereich des Tragrahmens angelenkt sind und an ihren freien Enden Befestigungseinrichtungen aufweisen, die hinter die Oberkante der Heckklappe fassen können. Auf der gleichen Schwenkachse, über die die Haltestreben an dem Tragrahmen angelenkt sind, sitzen Abstützstreben, die ebenfalls schwenkbar sind und die an ihren freien Enden Abstützelemente zwecks Abstützung auf der Heckklappe, vorzugsweise auf einer Knickkante der Heckklappe, aufweisen. Die Abstützstreben und Haltestreben bilden jeweils stabile Dreiecke, an denen der Tragrahmen in an der Heckklappe montiertem Zustand um eine horizontale Achse schwenkbar aufgehängt ist.

Die freien unteren Enden des Tragrahmens sind ebenfalls mit Befestigungseinrichtungen versehen, die in montiertem Zustand die Unterkante der Heckklappe umfassen und auf diese Weise den Tragrahmen zu befestigen. Zusätzlich sind in diesem Bereich Stützstreben schwenkbar angelenkt, welche derart längenverstellbar sind, dass sich nach der Montage eine zusätzliche Abstützung des Tragrahmens auf der Oberseite der Stoßstange des Kraftfahrzeugs ergibt.

Ferner ist aus der WO 98/09481 ein Hecklastenträger bekannt. Dieser besitzt einen Tragrahmen, an dem eine Anschlusseinrichtung vorgesehen ist, über welche der Hecklastenträger an einem Anschlusskopf einer fahrzeugseitigen Anhängerkupplung fixiert werden kann. Hierzu wird die Anschlußeinrichtung derart auf die fahrzeugseitige Anhängerkupplung aufgesetzt, dass der Anschlusskopf der Anhängerkupplung in einer Aufnahme der Anschlusseinrichtung aufgenommen wird. Anschließend wird der Anschlusskopf in der Aufnahme fixiert, indem zumindest eines der Halteelemente mit Hilfe einer Betätigungseinrichtung in Richtung des Kopfes in eine Klemmstellung verschoben wird. Die Halteelemente der Anschlusseinrichtung umfassen dann den Anschlusskopf der fahrzeugseitigen Anhängerkupplung und fixieren so den Lastenträger an dem Fahrzeug.

An den vorbekannten Hecklastenträger wird als nachteilig empfunden, daß sie teilweise nicht einfach zu montieren sind. Dies liegt daran, daß die Anschlußeinrichtung exakt auf dem Anschlußkopf positioniert sein muß, damit die Halteelemente in die Klemmstellung gebracht werden können. Außerdem müssen die Halteelemente auch vollständig auseinander gebracht sein, um die Anschlußeinrichtung auf dem Anschlußkopf positionieren oder von dem Anschlußkopf nehmen zu können.

Ein Hecklastenträger der eingangs genannten Art ist schließlich aus der DE 101 55 232 A1 bekannt. Bei diesem Hecklastenträger ist das bewegbare Halteelement nicht wie bei den zuvor beschriebenen Trägern translatorisch, sondern schwenkend bewegbar, wobei die Schwenkachse am oberen Endbereich des Halteelements positioniert ist. Durch diese Ausgestaltung wird erreicht, dass beim Öffnungsvorgang das erste Halteelement zur Seite und nach oben von dem angegriffenen Anschlusskopf eine Anhängerkupplung wegbewegt wird und diesen freigibt, so dass der Hecklastenträger einfach nach oben von dem Anschlusskopf abgezogen werden kann. Die schwenkende Verstellung des Halteelements hat den weiteren Vorteil, dass die Halteelemente in der geöffneten Einschubstellung in ihrem oberen Endbereich näher zueinander liegen als in ihrem unteren Endbereich. Aufgrund dieser etwa umgekehrt V-förmigen Positionierung wirken die Halteelemente als Führung, wenn die Anschlusseinrichtung auf eine Anhängerkupplung aufgeschoben wird. Im Ergebnis ist der Hecklastenträger leicht zu montieren und demontieren.

Aufgabe der Erfindung ist es, einen Hecklastenträger der vorgenannten Art so auszubilden, dass die Haltekraft der Halteelemente je nach Belastung auf den Hecklastenträger und unter Berücksichtigung der Ausbildung der fahrzeugseitigen Anhängerkupplung angepasst werden kann.

Diese Aufgabe ist erfindungsgemäß dadurch gelöst, dass das zweite Halteelement zur Einstellung der erzeugbaren Haltekraft verstellbar und an seinem der offenen Unterseite der Aufnahme gegenüber liegenden oberen Endbereich an dem Anschlußkörper um eine zur horizontalen Schwenkachse des ersten Halteelements parallele Schwenkachse verschwenkbar gehalten ist. In diesem Fall ist es zweckmäßig, wenn zwischen den Halteelementen ein Federelement angebracht ist, das die Halteelemente auseinanderdrückt, und an dem Anschlusskörper ein verstellbarer Anschlag vorgesehen ist, welcher eine Bewegung des zweiten Halteelements weg von dem ersten Halteelements und die Haltestellung des zweiten Halteelements definiert.

Um die erforderlichen hohen Haltekräfte in den Halteelementen zu erzeugen, ist die Betätigungseinrichtung vorzugsweise als Hebelmechanismus ausgebildet, der unterschiedlich ausgestaltet sein kann. Bei einem Ausführungsbeispiel besitzt die Betätigungseinrichtung einen Betätigungshebel, der an seinem einen Endbereich an den Anschlusskörper angelenkt und über einen Zwischenhebel derart mit dem bewegbaren Halteelement gelenkig verbunden ist, dass eine Schwenkbewegung des Betätigungshebels in eine Schwenkbewegung des bewegbaren Halteelements um seine Schwenkachse umgesetzt wird. Hierbei sind der Betätigungshebel und der Zwischenhebel der Betätigungseinrichtung zweckmäßiger Weise im wesentlichen in vertikaler Richtung verschwenkbar. Mit Hilfe einer so ausgebildeten Betätigungseinrichtung kann das bewegbare Halteelement schnell und einfach zwischen der Haltestellung und der Einschubstellung hin und her bewegt werden, wobei zusätzlich die nötige hohe Haltekraft erzeugt werden kann.

Gemäß einer bevorzugten Ausführungsform ist vorgesehen, dass der Zwischenhebel mit dem unteren Endbereich des bewegbaren Halteelements gelenkig verbunden ist. Auf diese weise ist eine effektive Übertragung der Kraft von der Betätigungseinrichtung auf das bewegbare Halteelement sichergestellt.

In vorteilhafter weise kann eine Sicherungseinrichtung vorgesehen sein, um den Betätigungshebel in einer der Haltestellung des bewegbaren ersten Halteelements entsprechenden Endposition zu arretieren. Beispielsweise kann die Sicherungseinrichtung einen Sicherungsstift aufweisen, der an dem Anschlußkörper verschiebbar gehalten und in der Haltestellung des ersten Halteelements in eine Sicherungsstellung bringbar ist, in der er in Eingriff mit einer Ausnehmung des Betätigungshebels oder des Zwischenhebels kommt, um die Betätigungeinrichtung gegen eine ungewollte Verstellung in die Einschubstellung zu sichern.

Gemäß einer bevorzugten Ausgestaltung ist hierbei vorgesehen, dass der Sicherungsstift durch ein Federelement in seine Sicherungsstellung gedrückt wird. Hierdurch wird erreicht, daß der Sicherungsstift automatisch durch das Federelement in Eingriff mit dem Betätigungshebel bzw. dem Zwischenhebel gebracht und dann auch aktiv gehalten wird, wenn die Haltestellung erreicht wird. Dies erleichtert die Handhabung des Hecklastenträgers erheblich.

Die Erfindung wird im folgenden anhand eines Ausführungsbeispiel unter Bezugnahme auf die Zeichnung näher erläutert. In der Zeichnung zeigt:
- Figur 1: in Schnittansicht eine erste erfindungsgemäß ausgebildete Anschlusseinrichtung zur Fixierung eines Hecklastenträgers an einem Kraftfahrzeug,
- Figur 2: die Anschlusseinrichtung aus Figur 1 in Draufsicht.

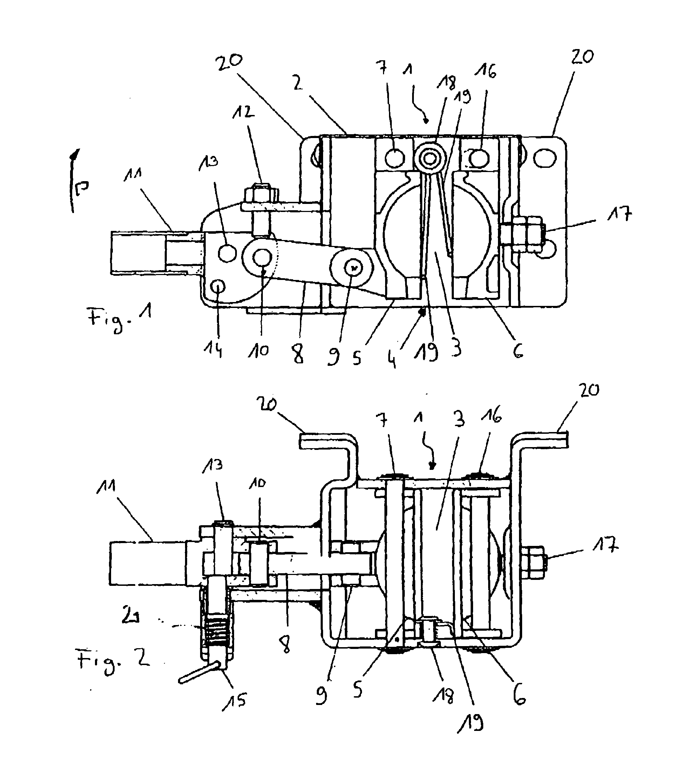

In den Figuren 1 und 2 ist eine Ausführungsform einer Anschlusseinrichtung 1 dargestellt, die dazu dient, einen ansonsten nicht näher dargestellten Hecklastenträger mit einem Tragrahmen an einer Anhängerkupplung eines Kraftfahrzeuges heckseitig anzubringen. Die Anschlusseinrichtung 1 weist einen Anschlusskörper 2 auf, der an einem Tragrahmen des Hecklastenträgers über zwei Flansche 20 fixiert werden kann und eine Aufnahme 3 mit einer untenseitig vorgesehenen Öffnung 4 für den Anschlusskopf der Anhängerkupplung bildet.

Die Aufnahme 3 wird hier von zwei Halteelementen 5, 6 definiert, die einander gegenüberliegend in dem Anschlußkörper 2 angeordnet sind und jeweils eine an die Form des zu greifenden Anschlußkopfes angepaßte halbschalenförmige Vertiefung für eine optimale Fixierung des Anschlusskopfes aufweisen.

Wie insbesondere die Figur 2 gut erkennen läßt, ist das erste Halteelement 5 an seinem der Öffnung 4 gegenüberliegenden oberen Endbereich um eine sich quer durch den Anschlußkörper 2 erstreckende Schwenkachse 7 an dem Anschlusskörpers 2 schwenkbar gelagert und kann über eine Betätigungseinrichtung in der Form eines Hebelmechanismus verschwenkt werden. Der Hebelmechanismus umfasst einen Betätigungshebel 11, der an dem Anschlußkörper 2 angelenkt ist und um eine parallel zur Schwenkachse 7 des ersten Halteelements 5 liegende Schwenkachse 13 verschwenkt werden kann. Der Betätigungshebel 11 ist mit dem ersten Halteelement 5 über einen Zwischenhebel 8 verbunden, der einerseits an dem unteren Endbereich des ersten Halteelements 5 und andererseits an einem zum Halteelement 5 weisenden Arm 11a des Betätigungshebels 11 über Gelenke 9, 10, deren Achsen ebenfalls parallel zur Schwenkachse 7 des ersten Halteelements 5 liegen, schwenkbar angeschlossen ist. Im übrigen ist ein verstellbarer Anschlag 12 vorgesehen, der an der Oberseite des Zwischenhebels 8 anliegt. Infolge dieser Anordnung wird das erste Halteelement 5 bei einer Schwenkbewegung des Betätigungshebels 11 aus der in Figur 1 gezeigten Ausgangslage im Uhrzeigersinn von dem zweiten Halteelement 6 weggezogen und führt dabei ebenfalls 3 eine Schwenkbewegung im Uhrzeigersinn um seine Schwenkachse 7 aus.

Desweiteren ist eine Sicherungseinrichtung vorgesehen, um den Hebelmechanismus in der in Figur 1 gezeigten Ausgangslage gegen ein ungewolltes Verschwenken zu sichern. Die Sicherungseinrichtung umfaßt einen Scherungsstift 15, der an dem Anschlußkörper 2 quer zur Schwenkebene des Hebelmechanismus verschiebbar gehalten ist und durch eine Druckfeder 21 gegen den Arm 11a des Betätigungshebels 11 gedrückt wird. In dem Arm 11a des Betätigungshebels 11 ist eine Bohrung 14 ausgebildet, in die der federbeaufschlagte Sicherungsstift 15 gedrückt wird, wenn sich der Betätigungshebel 11 in seiner in Figur 1 gezeigten abgesenkten Position befindet.

Das zweite Halteelement 6 ist an seinem oberen Endbereich über eine parallel zur Schwenkachse 7 des ersten Halteelements 5 liegende Schwenkachse 16 an dem Anschlusskörper 2 angebracht. Mit seiner Rückseite liegt es an einem Anschlag 17 an, der in Form einer Stellschraube ausgebildet ist und an dem Anschlußkörper 2 in Richtung des zweiten Halteelements 6 und von diesem weg verstellbar gehalten ist.

Zwischen den Halteelementen 5 und 6 ist eine Torsionsfeder 18 vorgesehen, die an dem Anschlusskörper 2 befestigt ist und sich mit ihren Federarmen 19 an den Halteelementen 5, 6 abstützt, so dass diese voneinander weg gedrückt werden.

Die Anschlusseinrichtung 1 ist in ihrer Haltestellung gezeigt, in der sich der Betätigungshebel 11 in seiner abgesenkten Position befindet und dort durch den Sicherungsstift 15, der die Bohrung 14 des Betätigungshebels durchsetzt, arretiert ist. Die Halteelemente 5, 6 liegen nahezu parallel zueinander und sind derart positioniert, dass sie einen in der Aufnahme 3 befindlichen Anschlusskopf vollständig umfassen und so eine feste Verbindung zwischen dem Hecklastenträger und dem Kraftfahrzeug garantieren.

Um die Anschlusseinrichtung 1 aus der gezeigten Haltestellung in eine Einschubstellung zu bringen, wird zunächst der Sicherungsstift 15 aus der Bohrung 14 entgegen der Rückstellkraft der Druckfeder 21 herausgezogen. Nach der so erfolgten Entsicherung wird der Betätigungshebel 11 um seine horizontale Schwenkachse 13 in Richtung des Pfeils P im Uhrzeigersinn nach oben verschwenkt. Infolge dieser Bewegung wird das bewegbare erste Halteelement 5 durch den Zwischenhebel 8 von dem zweiten Halteelement 6 weg gezogen und führt dabei eine Schwenkbewegung um seine Schwenkachse 7 aus. Die Schwenkbewegung wird durch die Rückstellkraft der Torsionsfeder 18 unterstützt. Als Ergebnis dieser Schwenkbewegung öffnet sich die Aufnahme 3.

In der vollständig geöffneten Einschubstellung nehmen die beiden Halteelemente 5, 6 an ihren unteren Endbereichen einen maximalen Abstand ein, während die oberen Endbereiche näher zueinander liegen. Aufgrund dieser etwa umgekehrt V-förmigen Positionierung wirken die Halteelemente 5, 6 als Führung, wenn die erfindungsgemäß ausgebildete Anschlußeinrichtung auf eine Anhängerkupplung geschoben wird. Im Ergebnis ist der Hecklastenträger gemäß der Erfindung leicht zu montieren und demontieren.

## Patentansprüche

1. Hecklastenträger zur Montage an einem Kraftfahrzeug mit einem Tragrahmen, der eine Anschlusseinrichtung (1) zur Befestigung an einer fahrzeugseitigen Anhängerkupplung aufweist, wobei die Anschlusseinrichtung (1) einen Anschlusskörper (2) sowie ein erstes und ein zweites Halteelement (5, 6), die zwischen sich eine nach unten hin offene Aufnahme (3) für einen Anschlusskopf der Anhängerkupplung bilden, aufweist, wobei das erste Halteelement (5) an seinem der offenen Unterseite der Aufnahme (3) gegenüber liegenden oberen Endbereich an dem Anschlußkörper (2) um eine horizontale Schwenkachse (7) verschwenkbar gehalten ist und mittels einer Betätigungseinrichtung zwischen einer Haltestellung, in der die Halteelemente (5, 6) einen in der Aufnahme befindlichen Anschlusskopf der Anhängerkupplung fixierend umfassen, und einer Einschubstellung, in der die Halteelemente (5, 6) einen derartigen Abstand zueinander haben, dass die Anschlusseinrichtung (1) leicht auf den Anschlusskopf der Anhängerkupplung aufgesetzt und davon herunter genommen werden kann, hin und her bewegbar ist, **dadurch gekennzeichnet, dass** das zweite Halteelement (6) zur Einstellung der erzeugbaren Haltekraft verstellbar und an seinem der offenen Unterseite der Aufnahme (3) gegenüber liegenden oberen Endbereich an dem Anschlußkörper (2) um eine zur horizontalen Schwenkachse (7) des ersten Halteelements (5) parallele Schwenkachse (16) verschwenkbar gehalten ist.

2. Hecklastenträger nach Anspruch 1, **dadurch gekennzeichnet, dass** die Betätigungseinrichtung einen Betätigungshebel (11) aufweist, der an seinem einen Endbereich an den Anschlusskörper (2) angelenkt und über einen Zwischenhebel (8) derart mit dem beweglichen Halteelement (5) gelenkig verbunden ist, dass eine Schwenkbewegung des Betätigungshebels (11) in eine Schwenkbewegung des bewegbaren Halteelements (5) um seine Schwenkachse (7) umgesetzt wird.

3. Hecklastenträger nach Anspruch 2, **dadurch gekennzeichnet, dass** der Betätigungshebel (11) und der Zwischenhebel (8) der Betätigungseinrichtung im wesentlichen in vertikaler Richtung verschwenkbar sind.

4. Hecklastenträger nach Anspruch 2 oder 3, **dadurch gekennzeichnet, dass** der Zwischenhebel (8) mit dem unteren Endbereich des bewegbaren Halteelements (5) gelenkig verbunden ist.

5. Hecklastenträger nach einem der Ansprüche 2 bis 4, **dadurch gekennzeichnet, dass** eine Sicherungseinrichtung vorgesehen ist, um den Betätigungshebel (11) in einer der Haltestellung des bewegbaren ersten Halteelements (5) entsprechenden Endposition zu arretieren.

6. Hecklastenträger nach Anspruch 5, **dadurch gekennzeichnet, dass** die Sicherungseinrichtung einen Sicherungsstift (15) aufweist, der an dem Anschlußkörper (2) verschiebbar gehalten und in der Haltestellung des ersten Halteelements (5) in eine Sicherungsstellung, in der er in Eingriff mit einer Ausnehmung (15) des Betätigungshebels (11) oder des Zwischenhebels (8) kommt, bringbar ist, um die Betätigungeinrichtung gegen eine ungewollte Verstellung in die Einschubstellung zu sichern.

7. Hecklastenträger nach einem der Ansprüche 1 bis 6, **dadurch gekennzeichnet, dass** der Sicherungsstift (15) durch ein Federelement (21) in seine Sicherungsstellung gedrückt wird.

8. Hecklastenträger nach einem der vorherigen Ansprüche, **dadurch gekennzeichnet, dass** die Halteelemente (5, 6) durch ein Federelement (18) auseinander gedrückt werden und an dem Anschlußkörper (2) ein verstellbarer Anschlag (17) vorgesehen ist, welcher eine Bewegung des zweiten Halteelements (6) weg von dem ersten Halteelement (5) begrenzt.

## Claims

1. A rear load carrier for fitting onto a motor vehicle with a carrier frame which has a connecting device (1) for attachment to a trailer coupling on the vehicle side, the connecting device (1) having a connecting body (2) as well as a first and a second retaining element (5, 6) which form between them a retainer (3) open to the bottom for a connecting head of the trailer coupling, the first retaining element (5) being held on the connecting body (2) swivelably on its upper end region lying opposite the open lower side of the retainer (3) about a horizontal swivel axis (7) and being moveable to and fro by means of an actuation device between a retaining position in which the retaining elements (5, 6) embrace, such as to fix, a connecting head of the trailer coupling located in the retainer, and an insertion position in which the retaining elements (5, 6) are spaced apart from one another such that the connecting device (1) is placeble easily on the connecting head of the trailer coupling and can be taken down from the latter, **characterised in that** the second retaining element (6) can be adjusted in order to set the retaining force that can be generated and is held on the connecting body (2) swivelably on its upper end region lying opposite the open lower side of the retainer (3) about a swivel axis (16) parallel to the horizontal swivel axis (7) of the first retaining element (5).

2. The rear load carrier according to Claim 1, **characterised in that** the actuation device has an actuation lever (11) which is pivoted on its one end region onto the connecting body (2) and is connected flexibly to the moveable retaining element (5) by means of an intermediate lever (8) such that a swivel movement of the actuation lever (11) is converted into a swivel movement of the moveable retaining element (5) about its swivel axis (7).

3. The rear load carrier according to Claim 2, **characterised in that** the actuation lever (11) and the intermediate lever (8) of the actuation device are swivelable substantially in the vertical direction.

4. The rear load carrier according to Claim 2 or 3, **characterised in that** the intermediate lever (8) is connected flexibly to the lower end region of the moveable retaining element (5).

5. The rear load carrier according to any of Claims 2 to 4, **characterised in that** a locking device is provided in order to lock the actuation lever (11) in an end position corresponding to the retaining position of the moveable first retaining element (5).

6. The rear load carrier according to Claim 5, **characterised in that** the locking device has a locking pin (15) which is held moveably on the connecting body (2) and in the retaining position of the first retaining element (5) can be brought into a locking position in which it engages with a recess (15) of the actuation lever (11) or of the intermediate lever (8) in order to lock the actuation device against undesired displacement into the insertion position.

7. The rear load carrier according to any of Claims 1 to 6, **characterised in that** the locking pin (15) is pushed into its locking position by means of a spring element (21).

8. The rear load carrier according to any of the preceding claims, **characterised in that** retaining elements (5, 6) are pushed apart by a spring element (18) and an adjustable stop (17) is provided on the connecting body (2) which restricts a movement of the second retaining element (6) away from the first retaining element (5).

## Revendications

1. Dispositif porte-charge a monter à l'arrière d'un véhicule avec un cadre porteur, qui présente un dispositif de raccordement (1) pour une fixation à un accouplement de remorque côté véhicule, sachant que le dispositif de raccordement (1) présente un corps de raccordement (2) et un premier et un deuxième élément de retenue (5, 6) qui forment entre eux un réceptacle (3) ouvert vers le bas pour une tête de raccordement de l'accouplement de remorque, sachant que le premier élément de retenue (5) sur son extrémité supérieure se trouvant à l'opposé du côté inférieur du réceptacle (3) sur le corps de raccordement (2) est maintenu de manière pivotable autour d'un axe de pivotement horizontal (7) et peut être déplacé d'un côté et de l'autre au moyen d'un dispositif d'actionnement entre une position de retenue, dans laquelle les éléments de retenue (5, 6) comprennent par fixation une tête de raccordement de l'accouplement de remorque se trouvant dans le réceptacle et une position insérée dans laquelle les éléments de retenue (5, 6) ont une distance l'un par rapport à l'autre de telle manière que le dispositif de raccordement (1) peut être facilement posé sur la tête de raccordement de l'accouplement de remorque et peut être retiré, **caractérisé en ce que** le deuxième élément de retenue (6) est ajustable en vue du réglage de la force de retenue pouvant être produite et au niveau de son extrémité supérieure située à l'opposé de la partie inférieure ouverte du réceptacle (3) sur le corps de raccordement (2) est maintenu de manière pivotable autour d'un axe de pivotement parallèle (16) à l'axe de pivotement horizontal du premier élément de retenue (5).

2. Dispositif porte-charge selon revendication 1, **caractérisé en ce que** le dispositif d'actionnement présente un levier d'actionnement (11) qui est relié de manière articulée sur une extrémité sur le corps de raccordement et par un levier intermédiaire (8) de manière souple avec l'élément de retenue (5) mobile, de telle manière qu'un mouvement de pivotement de l'élément de retenue (5) pouvant être bougé, est déplacé autour de son axe de pivotement (7).

3. Dispositif porte-charge selon revendication 2, **caractérisé en ce que** le levier d'actionnement (11) et le levier intermédiaire (8) du dispositif d'actionnement sont essentiellement pivotables dans le sens vertical.

4. Dispositif porte-charge selon revendication 2 ou 3, **caractérisé ce que** le levier intermédiaire (8) est relié de manière souple avec l'extrémité inférieure de l'élément de retenue (5) pouvant être déplacé.

5. Dispositif porte-charge selon l'une des revendications 2 à 4, **caractérisé en ce qu'**un dispositif de sécurité est prévu, pour bloquer le levier d'actionnement (11) dans une position finale correspondant à la position de retenue du premier élément de retenue (5) pouvant être déplacé.

6. Dispositif porte-charge selon revendication 5, **caractérisé en ce que** le dispositif de sécurité présente une goupille de sécurité (15), qui est maintenue de manière coulissante au niveau du corps de raccordement (2) et peut être mise dans la position de retenue du premier élément de retenue (5) dans une position de sécurité, dans laquelle elle s'encliquette avec un évidemment (15) du levier d'actionnement (11) ou du levier intermédiaire (8), pour protéger le dispositif d'actionnement contre un réglage involontaire dans la position insérée.

7. Dispositif porte-charge selon l'une des revendications 1 à 6, **caractérisé en ce que** la goupille de sécurité (15) est pressée par un élément de ressort (21) dans sa position de sécurité.

8. Dispositif porte-charge selon l'une des revendications précédentes, **caractérisé en ce que** les éléments de retenue (5, 6) sont pressés par un élément de ressort (18) en étant séparés et au niveau d'un corps de raccordement (2) une butée réglable (17) est prévue, qui délimite un mouvement du deuxième élément de retenue (6) loin du premier élément de retenue (5).
